# EUROPÄISCHE PATENTSCHRIFT

(11) **EP 2 069 211 B1**
(45) Veröffentlichungstag und Bekanntmachung des Hinweises auf die Patenterteilung: **24.02.2010**
(21) Anmeldenummer: 07800652.5
(22) Anmeldetag: 20.09.2007
(51) Int. Cl.: B65D 5/74, B29C 45/00

(54) **HALBFABRIKAT ZUR FERTIGUNG EINES KUNSTSTOFFVERSCHLUSSES AUS ZWEI TEILEN**
SEMI-FINISHED PRODUCT FOR PRODUCING A PLASTIC CLOSURE FROM TWO PARTS
PRODUIT SEMI-FINI POUR LA FABRICATION D'UNE FERMETURE EN MATIÈRE PLASTIQUE EN DEUX PARTIES

(30) Priorität: 26.09.2006 CH 15302006
(43) Veröffentlichungstag der Anmeldung: 17.06.2009
(73) Patentinhaber: Deltona Innovations AG, 8124 Maur (CH)
(72) Erfinder: DUBACH, Werner Fritz, 8124 Maur (CH)
(74) Vertreter: Schneider Feldmann AG Patent- und Markenanwälte
(86) Internationale Anmeldenummer: PCT/CH2007/000461
(87) Internationale Veröffentlichungsnummer: WO 2008/037100

(56) Entgegenhaltungen:
- WO-A-01/74683
- WO-A-99/00308
- WO-A-2004/041669

## Beschreibung

Die vorliegende Erfindung betrifft ein Halbfabrikat zur Fertigung eines Kunststoffverschlusses aus zwei Teilen, bestehend aus einem Ausgusselement als erstem Teil mit einem auf einen Behälter befestigbaren Flansch und einem Ausguss mit an dessen zylindrischen Ausgusswand vorhandenem Aussengewinde und einer Schraubkappe als zweiten Teil, mit Deckfläche und Innengewinde zum Verschliessen des Ausgusses.

Zweiteilige Kunststoffverschlüsse die aus einem Ausgusselement als erstem Teil und einer Schraubkappe als zweiten Teil bestehen, sind Massenprodukte die auf Weichverpackungen üblicherweise angebracht werden. Hierbei handelt es sich um Verschlüsse die in enorm grosser Stückzahl gefertigt werden. Entsprechend sind die Anforderungen an mögliche Kostenersparnisse enorm hoch. Kosten lassen sich sparen indem beispielsweise die Zahl der erforderlichen Spritzgussformen reduziert wird, aber auch durch Vereinfachung des Montageverfahrens welches dadurch schneller und mit einfacheren Montagemaschinen realisiert werden kann.

Es liegt daher relativ nahe, die beiden Teile eines solchen Kunststoffverschlusses als einteiliges Halbfabrikat herzustellen, um somit beide Teile in einer einzigen Spritzgussform zu erzeugen. Hierbei geht man vom Grundgedanken aus, dass man die beiden Teile in der montagekorrekten Position übereinander positioniert einteilig spritzt, wobei die beiden Teile über Sollbruchstellenbrücken miteinander verbunden sind. Um dies zu realisieren muss der Innendurchmesser der beiden übereinander angeordneten Teile bezüglich ihrem Innendurchmesser so gestaltet sein, dass der Kern sich aus dem Kunststoffteil herausziehen lässt. Um dies zu ermöglichen hat man bei bisherigen Lösungen die Schraubkappe immer so gestaltet, dass diese ein Aussengewinde aufweist und das Flanschelement ein entsprechendes Innengewinde so dass die Schraubkappe eigentlich die Gestalt eines Schraubzapfens aufweist. So lässt sich erreichen, dass der Kern durch das Flanschelement bis zur Deckfläche der Schraubkappe sich erstrecken kann und gleichzeitig die Unterkante der Schraubkappe mit der Oberkante der Ausgusswand des Flanschelementes sich über Sollbruchstellen verbinden lässt. Solche Lösungen sind aus verschiedenen Patentdokumenten bekannt. Beispielsweise zeigt die EP-A-502 716 eine solche Lösung.

Kunststoffverschlüsse dieser Art werden aber auf dem Markt kaum akzeptiert. Zum einen lassen sich solche Lösungen kaum ästhetisch ansprechbar realisieren und zudem sind solche Verschlüsse hygienisch unakzeptabel. Bei jeder Ausgusstätigkeit kommt das Innengewinde des Flanschelementes mit der Flüssigkeit in Berührung. Wird die Schraubkappe nun wieder aufgesetzt und zugedreht, so wird hierdurch nicht etwa, wie irrtümlich oft angenommen wird, das Gewinde praktisch selbst reinigend abgestreift, sondern vielmehr wird durch gewisse tribologische Eigenschaften beim Zuschrauben der Schraubkappe das Material im Gewindegang nach oben und aussen gepresst. Entsprechend ist nach mehrmaliger Benutzung der Verschluss vollständig verschmutzt. Des weiteren wird man nach dem Öffnen die Schraubkappe oftmals diese irgendwo hinlegen wollen, um mit der einen Hand das Behältnis zu halten aus dem man etwas auszuschütten wünscht, während man mit der anderen Hand entweder das Behältnis hält, in das man die Flüssigkeit umschütten will oder beispielsweise bei Lebensmitteln in dem man mit der anderen Hand einen Löffel oder Schwingbesen hält. Um den Verschluss irgendwo zwischenzeitlich abzulegen, muss man ihn folglich auf den Kopf stellen, wobei der verschmutzte Teil nach oben ragt. Beim Wiederverschliessen ist es praktisch unmöglich den Verschluss zu fassen, ohne dabei den verschmutzten Gewindebereich zu berühren. Dies ist einerseits unangenehm aber gleichzeitig kontaminiert man damit Lebensmittelreste, die am Schraubgewinde vorhanden sind und bringt diese in Kontakt mit dem Inhalt des Behältnisses bei der späteren Widerverschliessung des Verschlusses. Aus diesen Überlegungen heraus haben sich solche zweiteilige Verschlüsse, bei denen die Schraubkappe zapfenartig in den Ausguss hinein geschraubt werden, sich auf dem Markt nicht durchgesetzt.

Gerade die hier interessierenden Verschlüsse, werden auf typischen Getränkegebinden verwendet. Der Benutzer schraubt die Schraubkappe ab und führt das Flanschelement direkt an den Mund. Dies bedingt aus hygienischen Gründen somit, dass das Ausgusselement von der Schraubkappe geschützt wird. Eine zapfenartige Schraubkappe vermag diesen Hygieneanspruch nicht zu erfüllen.

Andererseits ist es aber unmöglich um Schraubkappen mit Innengewinden und Flanschelemente mit Aussengewinden auf der Ausgusswand einstückig zu fertigen, gemäss der bisherigen Lehre, da folglich der Innendurchmesser der Schraubkappe zwingend grösser ist als der Aussendurchmesser und erst recht als der Innendurchmesser des zylindrischen Ausgusses des Flanschelementes. Entsprechend lassen sich diese beiden Teile nicht so einstückig fertigen, dass Sollbruchstellen zwischen der Unterkante der Schraubkappe und der Oberkante des zylindrischen Ausgusses angebracht werden können und diese Teile so einstückig gefertigt sein können, da sich auf diese Weise der zweiteilige Kunststoffverschluss nicht mehr entformen lässt. Ein Beispiel solches Objektes zeigt die WO-A-2004/041669.

Es ist folglich die Aufgabe der vorliegenden Erfindung, unter Berücksichtigung der erwähnten Überlegungen, eine Lösung anzubieten, die trotzdem eine einteilige Fertigung der beiden Verschlussteile zulässt und zudem die Montage verbilligt im Vergleich zur Montage eines gleichen Verschlusses mit zweiteiliger Fertigung.

Die vorliegende Aufgabe löst ein Halbfabrikat zur Fertigung eines Kunststoffverschlusses gemäss Oberbegriff des Patentanspruches 1 welches sich dadurch auszeichnet, dass die beiden Teile über Sollbruchstellenbrücken miteinander so verbunden sind, dass die Sollbruchstellenbrücken sich von der Deckfläche der Kappe zu einem Teil des Ausgusselementes erstrecken.

Bei dieser scheinbar sinnwidrigen Anordnung ist es nicht möglich, die beiden Teile durch reines Zusammenschieben zu montieren, wie dies bei allen Lösungen des Standes der Technik realisiert wird. Trotzdem hat diese Lösung wirtschaftlich erhebliche Vorteile, da einerseits für beide Teile nur eine einzige Spritzgussform erforderlich ist, und zum andern weil das Montageverfahren wesentlich vereinfacht wird und entsprechend preisgünstigere Montagevorrichtungen benötigt werden.

In der Zeichnung sind zwei bevorzugte Ausführungsformen des Erfindungsgegenstandes dargestellt, und anhand der nachfolgenden Beschreibung erläutert.

Es zeigt:
- Figur 1: eine erste Ausführungsform des erfindungsgemässen Halbfabrikates in einem axialen Längsschnitt, der durch die Sollbruchstellenbrücken verläuft.
- Figur 2: zeigt eine zweite Ausführungsform des einstückig hergestellten Halbfabrikates, wiederum in einem vertikalen Axialschnitt und
- Figur 3: die Lösung gemäss Figur 2 um 90 ° gedreht so dass die Schnittebene wiederum durch die Sollbruchstellenbrücken verläuft.
- Figur 4: zeigt eine perspektivische Darstellung des Ausgusselementes nach der Trennung des Halbfabrikates, während
- Figur 5: die Schraubkappe in perspektivischer Darstellung nach der Trennung des Halbfabrikates zeigt.
- Figur 6: zeigt schematisch eine erste Variante des Verfahrens zur Montage eines Verschlusses aus einem Halbfabrikat gemäss der Erfindung und
- Figur 7: eine Variante dieses Verfahrens.

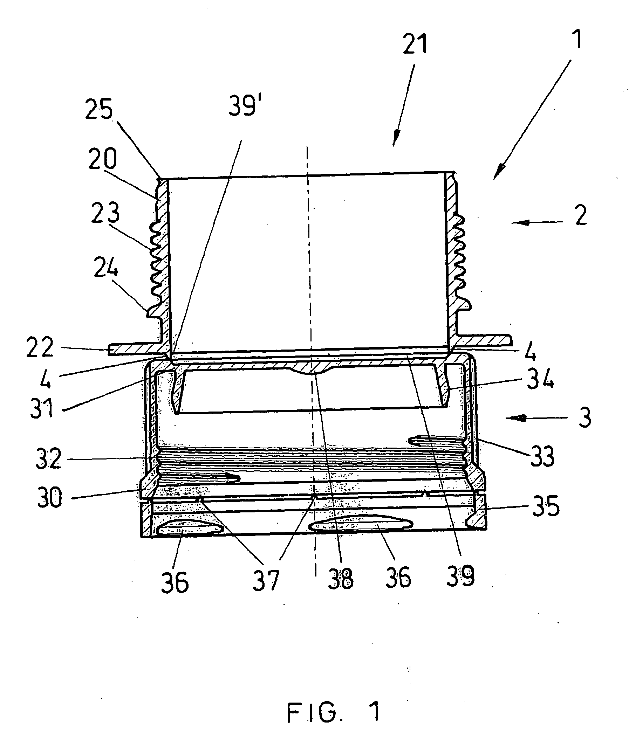

In der Figur 1 ist eine erste Ausführungsform eines Halbfabrikates, welches gesamthaft mit 1 bezeichnet ist, in einem axialen Längsschnitt gezeigt. Das Halbfabrikat 1 besteht aus zwei einstückig gefertigten Teilen, nämlich einem Ausgusselement 2 und einer Schraubkappe 3. Das Ausgusselement 2 hat eine zylindrische Wand 20, welche den eigentlichen Ausguss 21 bildet und einen endständigen Flansch 22. Die zylindrische Ausgusswand 20 ist mit einem Aussengewinde 23 versehen. Zusätzlich kann an der zylindrischen Ausgusswand 20 unterhalb dem Aussengewinde 23 eine umlaufende Rückhaltewulst 24 vorgesehen sein. Diese Rückhaltewulst 24 dient als Hintergriff für ein eventuell an der Schraubkappe 3 angeformtes Garantieelement. Die zylindrische Ausgusswand 20 kann schliesslich noch mit einem speziell gestalteten Ausgussrand 25 versehen sein, der ein tropffreies Ausgiessen erlaubt.

Die Schraubkappe 3 hat eine Mantelwand 30, die ebenfalls im Wesentlichen zylindrisch ist und von einer Deckfläche 31 oben abgeschlossen wird. Auf der Innenseite weist die Mantelwand 30 ein Innengewinde 32 auf. Auf der Aussenseite kann die Mantelwand 30 mit Rippen 33 oder anderen die Griffigkeit der Schraubkappe 3 erhöhenden Mittel versehen sein. Auf der Unterseite besitzt die Deckfläche eine umlaufende Ringwand, die als Dichtzapfen 34 dient und im verschlossenen Zustand des Verschlusses an der Innenseite der zylindrischen Ausgusswand 20 zum Anliegen kommt. Im hier dargestellten Beispiel, welches den Normalfall darstellt, ist fluchtend unter der Mantelwand 30 ein Garantieband 35 angeformt. Auf der Innenfläche des Garantiebandes 35 sind längliche Rückhaltenoppen 36 angeformt, die im montierten Zustand vor der Erstöffnung in formschlüssiger Verbindung mit der Rückhaltewulst 24 des Ausgusselementes 2 stehen. Die Verbindung zwischen dem Garantieband 35 und der Mantelwand 30 erfolgt über mehrere, zweite Sollbruchstellenbrücken 37. An der Deckflächenunterseite 31 erkennt man zentrisch angeordnet noch eine Verdickung 38.

Die beiden Teile des Halbfabrikates 1, nämlich das Ausgusselement 2 und die schraubkappe 3 sind über erste Sollbruchstellenbrücken 4 miteinander verbunden. Diese Sollbruchstellenbrücken sind generell die Verbindung zwischen dem Ausgusselement 2 und der Deckfläche 31 der Schraubkappe 3. Im Detail gesehen können diese Sollbruchstellenbrücken 4 an verschiedenen Orten angeformt sein. Im vorliegenden Fall, welche eine bevorzugte Ausführungsform darstellt, sind hier die ersten Solbruchstellenbrücken 4 direkt fluchtend mit der Innenkante der zylindrischen Ausgusswand 20 angeordnet auf der Seite des Ausgusselementes 2. Die Schraubkappe 3 besitzt eine zentrische Vertiefung 39, deren Durchmesser dem Innendurchmesser des Ausgusses 21 entspricht. Schrauppkappenseitig sind die ersten Sollbruchstellenbrücken 4 an der umlaufenden Kante 39' der zentrischen Vertiefung 39 angeformt. Durch diese Verbindungsweise ergeben sich Sollbruchstellenbrücken, die eine starke Kerbwirkung aufweisen und sich daher besonders gut trennen lassen. Dank dieser Ausgestaltung können die Sollbruchstellenbrücken 4 entweder sehr klein oder sehr wenige, dafür breitere Sollbruchstellenbrücken sein.

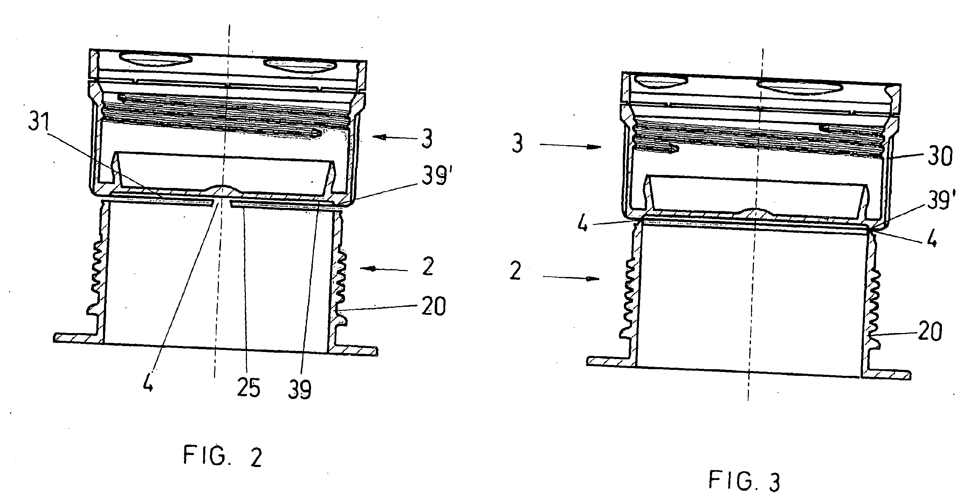

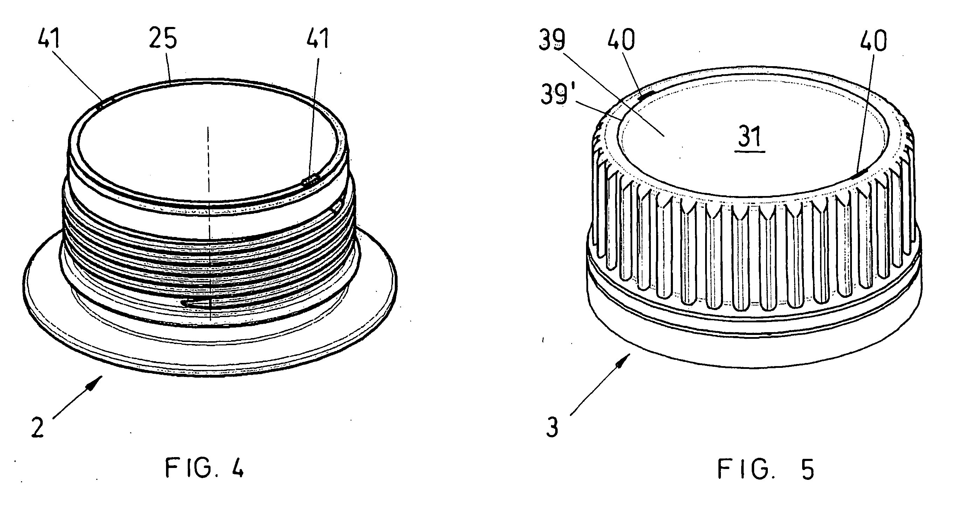

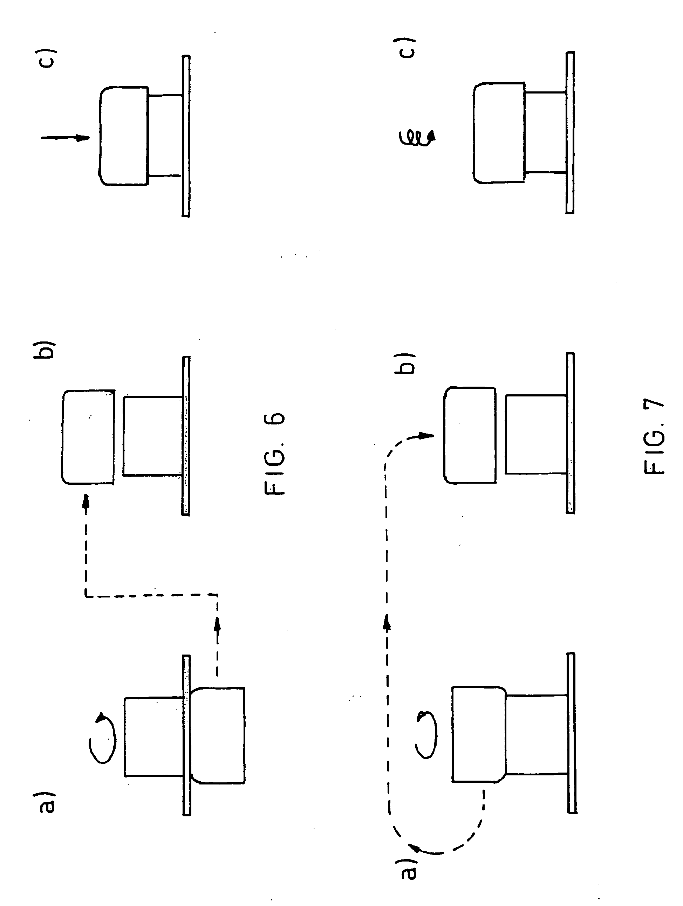

In den Figuren 2 und 3 ist eine weitere Ausgestaltungsform des Halbfabrikates dargestellt. Während zuvor das Ausgusselement flanschseitig über Sollbruchstellen 4 mit der Deckfläche 31 der Schraubkappe 3 verbunden dargestellt und beschrieben wurde, ist in dieser Ausführungsform die Verbindung zwischen dem Ausgusselement 2 und der Schraubkappe 3 über Sollbruchstellen 4 zwischen der Aussgussseite und der Deckfläche 31 der Schraubkappe 3 realisiert. Bezüglich der Herstellung ist die Lösung gemäss der Figur 1 mit jener der Figuren 2 und 3 vollständig ebenbürtig. Der Unterschied zwischen diesen beiden Varianten besteht im Wesentlichen darin, dass je nach der Ausführungsform das Verfahren zur Montage um aus dem Halbfabrikat einen montierten Kunststoffverschluss zu fertigen unterschiedlich ist. Hierauf wird jedoch erst bei der Beschreibung der Figuren 6 und 7 näher eingegangen. Auch hier weist die Schraubkappe 3 eine längliche Vertiefung auf, und die ersten Sollbruchstellenbrücken 4 greifen schraubkappenseitig wiederum an deren umlaufenden Kante 39' an. Auf der Seite des Ausgusselementes 2 sind die Sollbruchstellenbrücken wiederum fluchtend mit der Innenseite der zylindrischen Ausgusswand 21 angeformt. Während in der Figur 3 diese ersten Sollbruchstellenbrücken 4 in der Schnittebene liegen und somit geschnitten sind, zeigt die Figur 2 eine Darstellung um 90 ° gedreht, so dass nun eine erste Sollbruchstellenbrücke 4 voll ersichtlich ist. Bevorzugterweise wird man lediglich zwei erste Sollbruchstellenbrücken vorsehen, die einander diametral gegenüber liegend angeordnet sind. Die Wahl von lediglich zwei ersten Sollbruchstellenbrücken 4 wird bevorzugt, da hierdurch besonders einfache Spritzgusswerkzeuge realisierbar sind, die mit lediglich zwei Seitenzügen oder Schiebern auskommen. Werden diese beiden Schieber nach dem Spritzvorgang bezüglich der Mittelachse nach aussen geschoben, so ist nun das Kunststoffteil von aussen freigestellt und die im Innern vorhandenen Kerne lassen sich nun problemlos herausziehen, wobei die Aussenwände im erforderlichen Masse radial nach aussen federn können, ohne dass dabei die ersten oder zweiten Sollbruchstellenbrücken 4 beziehungsweise 37 beim entformen des Halbfabrikates reissen. In der Figur 4 erkennt man zudem, dass die Breite der ersten Sollbruchstellenbrücken 4 länger als deren Höhe ist. Die Höhe der ersten Sollbruchstellenbrücken 4 ist die Längsausdehnung derselben von der umlaufenden Kante 39' zum Ausgussrand 25. Die Länge einer solchen ersten Sollbruchstellenbrücke 4 beträgt in etwa das zwei- bis vierfache von deren Höhe.

In den Figuren 4 bis 5 ist das Halbfabrikat nach der Trennung dargestellt. Es zeigt die Figur 4 das Ausgusselement einer Ausführung gemäss den Figuren 2 und 3, während die Figur 5 die Schraubkappe in perspektivischer Ansicht von oben zeigt, wobei diese Ansicht sowohl der Ausführung gemäss der Figur 1 als auch jener der Figuren 2 und 3 entspricht. Typisch für einen Kunststoffverschluss, der aus einem Halbfabrikat gemäss der Erfindung erzeugt worden ist, sind die auf der Aussenseite der Deckfläche 31 der Schraubkappe 3, deutlich erkennbare Trennstellen 40, die hier entsprechend der Ausführung, gemäss den Figuren 2 und 3, sichtbar werden, wenn Ausgusselement 2 und Schraubkappe 3 voneinander getrennt worden sind. Natürlich sind gegengleiche Trennstellen 41 auch am Ausgusselement 2 erkennbar. In der Figur 4 befinden sich diese Trennstellen 41 auf dem Ausgussrand 25 des Ausgusselementes 2.

Um aus dem erfindungsgemässen Halbfabrikat, wie zuvor beschrieben, einen handelsüblichen Kunststoffverschluss zu realisieren, muss das einstückige Halbfabrikat in einer entsprechend gestalteten Montagevorrichtung beziehungsweise Montagelinie in verschiedenen Schritten montiert werden. In der Figur 6 ist ein solches Verfahren gemäss einem Halbfabrikat, wie in Figur 1 dargestellt, symbolisch gezeigt. Das Halbfabrikat wird in einem ersten Schritt an beiden Teilen, nämlich dem Ausgusselement 2 und der Schraubkappe 3 gehalten, worauf durch Rotation mindestens einer der beiden Teile relativ zum andern die ersten Sollbruchstellen 4 getrennt werden, wie dies in der Figur a dargestellt ist. Da die beiden Teile in einer ganz besonderen vorgegebenen Rotationsposition zueinander gespritzt worden sind und beide Teile festgehalten werden beim Trennen, bleiben auch diese Rotationspositionen erhalten, wobei lediglich entweder die beiden Teile in die ursprüngliche Relativposition zurückgedreht werden müssen oder in dem die Verdrehung um einen vorgegebenen Winkel erfolgt, der durch die Anlage festgelegt wird und somit ebenfalls die relative Rotationsposition beider Teile in der Montagelinie bekannt ist. In einem Schritt b werden nun die axialen Positionen der beiden Teile ausgetauscht, so dass nun die Schraubkappe 3 über dem Ausguss 21 des Ausgusselementes zu liegen kommt. Im nächsten Schritt soll dann, wie in c dargestellt, die Schraubkappe wie herkömmlich entweder aufgeschraubt oder aufgestossen werden, wobei dann das Innengewinde der Schraubkappe über das Aussengewinde des Ausgusselementes ratschenartig gleitet.

Bei der Ausführung des Verfahrens gemäss der Figur 7 geht man von der Lösung wie in den Figuren 2 und 3 dargestellt aus. Der Schritt a bleibt derselbe in dem wiederum die beiden Teile 2 und 3 relativ zueinander verdreht werden und damit die ersten Sollbruchstellenbrücken durchtrennt werden. Im nächsten Arbeitsschritt muss nunmehr lediglich die Schraubkappe 3 umgekehrt werden, so dass nunmehr die Öffnung der Schraubkappe zum Ausguss des Ausgusselementes hingerichtet ist. Dies ist unter b dargestellt. Bei dieser Manipulation kommt die Schraubkappe um 180 ° gedreht auf das Ausgusselement 2 zu liegen. Entsprechend wird man das Halbfabrikat so realisieren, dass bei der entsprechenden Manipulation Schraubkappe und Ausgusselement exakt winkelkorrekt zueinander zu liegen kommen, um dann im Schritt c die Schraubkappe wiederum aufzuschrauben oder aufzustossen.

Der Erfindungsgedanke der hier realisiert worden ist, widerspricht vollständig den üblichen Anordnungen solcher Elemente, die als Halbfabrikat realisiert werden und danach zusammen gefügt werden müssen. Im vorliegenden Fall ist aber eine einteilige Herstellung in einer Lage die zur direkten Montage geeignet ist, nicht möglich. Entsprechend würde der Fachmann eine einteilige Fertigung ausser Betracht lassen. Die Erfindung geht aber davon aus, dass bei der Montage, bei einer zweiteiligen Fertigung, die beiden Teile ebenfalls in bestimmten Relationspositionen axial und radial zueinander gebracht werden müssen, um dann montiert werden zu können. Bei der einstückigen Fertigung jedoch erübrigt sich die radiale Ausrichtung, da die radiale Ausrichtung der Teile bereits bei der Fertigung berücksichtigt worden ist. Entsprechend lassen sich solche Montagelinien wesentlich preiswerter realisieren. Hinzu kommt, der bereits erwähnte Vorteil, dass eine einstückige Fertigung billiger und schneller ist und weniger Spritzgussmaschinenkapazität erfordert.

### Bezugszeichenliste:

- 1: Halbfabrikat, einstückig
- 2: Ausgusselement
- 3: Schraubkappe
- 4: erste Sollbruchstellenbrücken

- 20: zylindrische Aussgusswand
- 21: Ausguss
- 22: Flansch
- 23: Aussengewinde
- 24: Rückhaltewulst
- 25: Ausgussrand

- 30: Mantelwand
- 31: Deckfläche
- 32: Innengewinde
- 33: Rippen
- 34: Dichtzapfen
- 35: Garantieband
- 36: längliche Rückhaltenoppen
- 37: zweite Sollbruchstellenbrücken
- 38: Verdickung
- 39: zentrische Vertiefung
- 39': umlaufende Kante
- 40: Trennstellenauf Deckfläche
- 41: Trennstellen auf Ausgussrand

## Patentansprüche

1. Halbfabrikat (1), zur Fertigung eines Kunststoffverschlusses aus zwei Teilen, bestehend aus einem Ausgusselement (2) als erstem Teil mit einem auf einem Behälter befestigbaren Flansch (22) und einem Ausguss (21) mit an dessen zylindrischer Ausgusswand (20) vorhandenem Aussengewinde (23) und einer Schraubkappe (3) als zweitem Teil mit Deckfläche (31) und Innengewinde (32) zum Verschliessen des Ausgusselementes (2),
**dadurch gekennzeichnet, dass** die beiden Teile (2,3) über die Sollbruchstellenbrücken (4) miteinander so verbunden sind, dass die Sollbruchstellenbrücken (4) von der Deckfläche (31) der Schraubkappe (3) zum Ausgusselement (2) sich erstrecken.

2. Halbfabrikat nach Anspruch 1, **dadurch gekennzeichnet, dass** die ersten Sollbruchstellenbrücken (4) von der Deckfläche (31) der Schraubkappe (3) zum oberen, dem Flansch (22) entfernteren Ende der Ausgusswand (20) verlaufen.

3. Halbfabrikat nach Anspruch 1, **dadurch gekennzeichnet, dass** die ersten Sollbruchstellenbrücken (4) von der Deckfläche (31) der Schraubkappe (3) zum unteren, dem Flansch (22) nahen Ende der Ausgusswand (20) verlaufen.

4. Halbfabrikat nach Anspruch 1, **dadurch gekennzeichnet, dass** die ersten Sollbruchstellenbrücken (4) von der Deckfläche (31) der Schraubkappe (3) zur unteren Fläche des Flansches (22) im Bereich nahe der dort mündenden Ausgusswand (20) verlaufen.

5. Halbfabrikat nach Anspruch 1, **dadurch gekennzeichnet, dass** die Deckfläche (31) der Schraubkappe (3) eine zentrische Vertiefung (39) aufweist, deren Durchmesser dem Innendurchmessers des Ausgusses (21) entspricht und die ersten Sollbruchstellenbrücken (4) mit einer Kante (39') der umlaufenden zentrischen Vertiefung (39) fluchtend angeordnet sind.

6. Halbfabrikat nach Anspruch 1, **dadurch gekennzeichnet, dass** die Schraubkappe (3) an deren Mantelwand (30) über zweite Sollbruchstellenbrücken (37) ein angeformtes Garantieelement (35) aufweist.

7. Verfahren zur Montage eines Kunststoffverschlusses aus einem Halbfabrikat nach einen der Ansprüche 1 - 7, **dadurch gekennzeichnet, dass** ein Teil verdrehgesichert gehalten oder geführt wird, während der andere Teil (2,3) ergriffen wird und die beiden Teile (2,3) zur Trennung der ersten Sollbruchstellenbrücken (4) relativ zueinander gedreht werden, worauf sie ohne losgelassen zu werden unter Beibehaltung der radialen Orientierung, relativ zueinander so bewegt werden, dass die Deckfläche (31) der Schraubkappe (3) und der Flansch (22) des Ausgusselementes (2) in zu einander abweisenden Richtung angeordnet sind und die Schraubkappe (3) und das Ausgusselement (2) axial fluchtend in zusammenfügbarer Ausrichtung zu einander gebracht sind, worauf die beiden Teile zusammengefügt werden.

8. Verfahren nach Anspruch 8, **dadurch gekennzeichnet, dass** die beiden Teile (2,3) durch eine Schraubbewegung zusammengefügt werden.

9. Verfahren nach Anspruch 8, **dadurch gekennzeichnet, dass** die beiden Teile (2,3) durch zusammenstossen, zusammengefügt werden, wobei die Gewinde (23,32) ratschenartig übereinander gleiten.

10. Aus einem Halbfabrikat nach Anspruch 1 gefertigter Kunststoffverschluss aus zwei Teilen, bestehend aus einem Ausgusselement (2) als einem Teil mit einem auf einen Behälter befestigbaren Flansch (22) und einem Ausguss (21) mit an dessen zylindrischen Ausgusswand (20) vorhandenen Aussengewinde (23) und einer Schraubkappe (3) als anderer Teil mit Deckfläche (31) und Innengewinde (32) zum Verschliessen des Ausgusses (21), **dadurch gekennzeichnet, dass** auf der Aussenseite der Deckfläche (31) Trennstellen (40) von Sollbruchstellenbrücken (4) erkennbar sind.

## Claims

1. A semi-finished good (1) for producing a plastic closure made up of two parts, consisting of a spout element (2) as the first part with a flange (22) that can be attached to a container and a spout (21) with an external thread (23) on its cylindrical spout wall (20) and a screw cap (3) as the second part with a top surface (31) and an internal thread (32) for closing the spout element (2),
**characterised in that** the two parts (2, 3) are connected to one another across predetermined breaking point bridges (4), such that the predetermined breaking point bridges (4) extend from the top surface (31) of the screw cap (3) to the spout element (2).

2. The semi-finished good according to claim 1, **characterised in that** the first predetermined breaking point bridges (4) run from the top surface (31) of the screw cap (3) to the top end of the spout wall (20) further removed from the flange (22).

3. The semi-finished good according to claim 1, **characterised in that** the first predetermined breaking point bridges (4) run from the top surface (31) of the screw cap (3) to the lower end of the spout wall (20) close to the flange (22).

4. The semi-finished good according to claim 1, **characterised in that** the first predetermined breaking point bridges (4) run from the top surface (31) of the screw cap (3) to the lower surface of the flange (22) in the area close to the spout wall (20) opening out there.

5. The semi-finished good according to claim 1, **characterised in that** the top surface (31) of the screw cap (3) exhibits a centric depression (39), the diameter of which corresponds to the internal diameter of the spout (21) and the first predetermined breaking point bridges (4) are disposed with one edge (39') flush to the surrounding centric depression (39).

6. The semi-finished good according to claim 1, **characterised in that** the screw cap (3) exhibits an integral guarantee element (35) on its casing wall (30) across second predetermined breaking point bridges (37).

7. A method of assembling a plastic closure made from a semi-finished good according to one of the claims 1-7, **characterised in that** one part is held or guided with an anti-twist safeguard, while the other part (2, 3) is gripped and the two parts (2, 3) are turned relative to one another to separate the first predetermined breaking point bridges (4), whereupon they are moved relative to one another without being released while maintaining the radial orientation, so that the top surface (31) of the screw cap (3) and the flange (22) of the spout element (2) are disposed in opposite directions to one another and the screw cap (3) and the spout element (2) are brought axially flush to one another in connectable alignment, whereupon the two parts are connected.

8. The method according to claim 8 (sic.), **characterised in that** the two parts (2, 3) are connected by a screw movement.

9. The method according to claim 8, **characterised in that** the two parts (2, 3) are connected together through impact, whereupon the threads (23, 32) slide over one another in a ratchet-like manner.

10. The plastic closure made from a semi-finished good according to claim 1, consisting of a spout element (2) as one part with a flange (22) that can be attached to a container and a spout (21) with an external thread (23) on its cylindrical spout wall (20) and a screw cap (3) as the other part with a top surface (31) and an internal thread (32) for closing the spout (21), **characterised in that** parting points (40) of predetermined breaking point bridges (4) are discernible on the outside of the top surface (31).

## Revendications

1. Produit semi-fini (1), destiné à la fabrication d'une fermeture en matière plastique en deux pièces, consistant dans un élément verseur (2) en tant que première pièce, avec une bride (22) susceptible de se fixer sur un récipient et avec un verseur (21) avec un filetage (23) présent sur sa paroi cylindrique de verseur (20) et avec un capuchon à visser (3) en tant que deuxième pièce, avec une surface de recouvrement (31) et un taraudage (32) pour fermer l'élément verseur (2),
**caractérisé en ce que** les deux pièces (2,3) sont reliées l'une à l'autre par l'intermédiaire de ponts à points de rupture (4) de sorte que les ponts à points de rupture (4) s'étendent de la surface de recouvrement (31) du capuchon à visser (3) vers l'élément verseur (2).

2. Produit semi-fini selon la revendication 1, **caractérisé en ce que** les premiers ponts à points de rupture (4) s'écoulent de la surface de recouvrement (31) du capuchon à visser (3) vers l'extrémité supérieure, éloignée de la bride (22) de la paroi de verseur (20).

3. Produit semi-fini selon la revendication 1, **caractérisé en ce que** les premiers ponts à points de rupture (4) s'écoulent de la surface de recouvrement (31) du capuchon à visser (3) vers l'extrémité inférieure, proche de la bride (22) de la paroi de verseur (20).

4. Produit semi-fini selon la revendication 1, **caractérisé en ce que** les premiers ponts à points de rupture (4) s'écoulent de la surface de recouvrement (31) du capuchon à visser (3) vers la surface inférieure de la bride (22) dans la zone proche de la paroi de verseur (20) qui y débouche.

5. Produit semi-fini selon la revendication 1, **caractérisé en ce que** la surface de recouvrement (31) du capuchon à visser (3) comporte une empreinte centrale (39) dont le diamètre correspond au diamètre intérieur du verseur (21) et **en ce que** les premiers ponts à points de rupture (4) sont disposés en étant alignés sur une arête (39') de l'empreinte centrale périphérique (39).

6. Produit semi-fini selon la revendication 1, **caractérisé en ce que** le capuchon à visser (3) comporte sur sa paroi d'enveloppe (30), au-dessus de deuxièmes ponts de points de rupture (37) un élément de garantie (35) rapporté.

7. Procédé de montage d'une fermeture en matière plastique à partir d'un produit semi-fini selon l'une quelconque des revendications 1 à 7, **caractérisé en ce qu'**on maintient ou on guide une pièce en la bloquant contre la rotation, alors qu'on saisit l'autre pièce (2,3) et que pour séparer les ponts à points de rupture (4), on fait tourner les deux pièces (2, 3) l'une par rapport à l'autre, suite à quoi, sans les lâcher et en maintenant l'orientation radiale, on les déplace l'une par rapport à l'autre de sorte que la surface de recouvrement (31) du capuchon à visser (3) et la bride (22) de l'élément verseur (2) soient disposées dans des directions opposées et que le capuchon à visser (3) et l'élément verseur (2) soient amenés en alignement axial, en orientation d'assemblage, suite à quoi, on assemble les deux pièces.

8. Procédé selon la revendication 8, **caractérisé en ce qu'**on assemble les deux pièces (2,3) par un mouvement de vissage.

9. Procédé selon la revendication 8, **caractérisé en ce qu'**on assemble les deux pièces (2,3) par aboutage, les filetages (23,32) glissant l'un sur l'autre à la manière d'un cliquet.

10. Fermeture en matière plastique en deux parties, fabriquée à partir d'un produit semi-fini selon la revendication 1, consistant dans un élément verseur (2) en tant qu'une pièce, avec une bride (22) susceptible de se fixer sur un récipient et avec un verseur (21) avec un filetage (23) présent sur sa paroi cylindrique de verseur (20) et avec un capuchon à visser (3) en tant qu'autre pièce, avec une surface de recouvrement (31) et un taraudage (32) pour fermer l'élément verseur (21), **caractérisé en ce qu'**on reconnaît sur la face extérieure de la surface de recouvrement (31) des points de séparation (40) de ponts à points de rupture (4) .
